# EUROPÄISCHE PATENTSCHRIFT

(11) **EP 1 291 247 B1**
(45) Veröffentlichungstag und Bekanntmachung des Hinweises auf die Patenterteilung: **31.03.2010**
(21) Anmeldenummer: 02019316.5
(22) Anmeldetag: 29.08.2002
(51) Int. Cl.: B60R 19/22, B60R 19/34, B60R 21/34, B60R 19/16

(54) **Frontstruktur eines Kraftfahrzeuges**
Frontbody structure of a vehicle
Structure avant d'un véhicule

(30) Priorität: 07.09.2001 DE 10143890
(43) Veröffentlichungstag der Anmeldung: 12.03.2003
(73) Patentinhaber: GM Global Technology Operations, Inc., Detroit, MI 48265-3000 (US)
(72) Erfinder: Nguyen, Viet Hung, Dipl.-Ing., 65197 Wiesbaden (DE); Kerkeling, Christoph, Dipl.-Ing., 55118 Mainz (DE)
(74) Vertreter: Strauss, Peter

(56) Entgegenhaltungen:
- DE-A- 4 228 878
- PATENT ABSTRACTS OF JAPAN vol. 018, no. 136 (M-1572), 7. März 1994 (1994-03-07) & JP 05 319186 A (SUZUKI MOTOR CORP), 3. Dezember 1993 (1993-12-03)
- PATENT ABSTRACTS OF JAPAN vol. 008, no. 047 (M-280), 2. März 1984 (1984-03-02) & JP 58 202132 A (NISSAN JIDOSHA KK), 25. November 1983 (1983-11-25)
- MOULIN J-P ET AL: "L'APPROCHE MODULAIRE BLOC ARRIERE: MAX" INGENIEURS DE L'AUTOMOBILE, RAIP. BOULOGNE, FR, Nr. 747, August 2001 (2001-08), Seiten 75-81, XP001078693 ISSN: 0020-1200
- PATENT ABSTRACTS OF JAPAN vol. 2000, no. 05, 14. September 2000 (2000-09-14) & JP 2000 062551 A (NIPPON LIGHT METAL CO LTD), 29. Februar 2000 (2000-02-29)

## Beschreibung

Die Erfindung bezieht sich auf die Frontstruktur eines Kraftfahrzeuges gemäß dem Oberbegriff des Anspruchs 1.

Eine derartige Frontstruktur ist in der EP 0 546 352 A1 beschrieben. Die vor den Längsträgern angeordneten Crashboxen haben die Aufgabe, bei leichten Kollisionen des Fahrzeuges mit einem schweren Hindernis die dabei auftretenden Energien durch Verformung aufzunehmen, ohne dass dabei der Längsträger in Mitleidenschaft gezogen wird. Crashboxen stellen praktisch eine Verlängerung der Längsträger dar, besitzen aber einen wesentlichen kleineren Widerstand gegen Verformung als diese. Bei leichten Kollisionen sind daher die Verformungen auf die Crashboxen beschränkt, so dass der Reparaturaufwand gering ist. Beschädigte Crashboxen brauchen lediglich vom Längsträger getrennt und durch neue ersetzt werden. Derartig gebaute Fahrzeuge sind wesentlich günstiger zu versichern als Fahrzeuge in herkömmlicher Bauweise. Eine entsprechende Einstufung in Versicherungsklassen erfolgt aufgrund von Tests, bei denen eine leichte Kollision simuliert wird. Sie werden nach ihrem Erfinder als Danner-Tests bezeichnet.

Die Frontstrukturen müssen aber nicht nur hinsichtlich des Danner-Testes optimiert werden, sondern auch so gestaltet sein, dass im Falle einer Kollision mit einem Fußgänger dessen Verletzungen möglichst gering bleiben. Eine Forderung besteht u.a. darin, dass die auf das Unterbein des Fußgängers wirkenden Kräfte zu begrenzen sind. Dies ist praktisch nur dadurch zu lösen, dass die Stoßfänger aus einem Querträger bestehen, der auf seiner Vorderseite mit einer weichen Schaumstofflage versehen ist, die allerdings bei einer Fahrzeug-Fahrzeug-Kollision oder bei einem Danner-Test keinen nennenswerten Widerstand bildet. Die Crashboxen müssen daher auch bei einem Fahrzeug mit einem gepolsterten Stoßfänger zur Erfüllung der Danner-Anforderungen ihre Länge beibehalten, was zur Folge hat, dass die Schaumstofflage eine Verlängerung des Fahrzeuges bewirkt.

Gemäß der JP 05319186 besitzt der Stoßfänger drei zur Front des Fahrzeuges gerichtete Absorber, wobei zwei äußere sich vor den Crashboxen befinden und ein mittlerer in der Mitte der Front. Dieser ragt gegenüber den anderen etwas vor, so dass er bei einem Aufprall gegen ein festes Hindernis als erster getauscht wird. Die Steifigkeit der Absorber und damit auch des mittleren Absorbers ist so ausgelegt, dass ein erhebliches Energieaufnahmevermögen vorliegt, wobei Kräfte entstehen, die über denjenigen liegen, die für den Unterschenkel eines Fußgängers verträglich sind.

Ähnliches gilt für den Stoßfänger gemäß der DE 42 28 878. Sein mittlerer Bereich soll demnach druckweich aufgelegt sein. Er ist damit zwar weicher als die Randbereiche, aber immer noch steif genug, um Kräfte aufnehmen zu können, wie sie bei einer Kollision mit einem festen Hindernis auftreten. Die Steifigkeit liegt auch hier somit über derjenigen, was der Unterschenkel eines Fußgängers ertragen würde.

Aus der JP 58202132 ist ein Stoßfänger mit einem Querträger bekannt, wobei an der Vorderseite des Querträgers sich ein Vorbau befindet. Der Vorbau weist in den Randbereichen steifere Strukturen auf, so daß der Vorbau in den Randbereichen härter als in mittleren Bereich ausgeführt ist.

Eine Frontstruktur gemäß dem Oberbegriff des Anspruchs 1 ist aus der JP 20000 62551 bekannt.

Die Erfindung beruht somit auf dem Problem, eine reparaturfreundliche Frontstruktur zu schaffen, die sich in einer Fußgänger-Fahrzeug-Kollision weich verhält und darüber hinaus nicht zu einer übermäßigen Verlängerung des Fahrzeuges beiträgt.

Das Problem wird mit einer Frontstruktur gemäß dem Anspruch 1 gelöst, deren Vorbau in seinem Mittenbereich so weich ist, dass auf ein Bein eines vom Kraftfahrzeug erfassten Fußgängers nur eine begrenzte, für ihn verträgliche Kraft wirkt, und dass dieser in den Randbereichen vor den Crashboxen härter als im Mittenbereich ausgeführt ist, so dass jeder Randbereich bei einem Danner-Test eine signifikante Energiemenge aufzunehmen vermag.

Die Überlegungen beruhen damit auf der Erkenntnis, dass bei Kollisionen mit einem Fußgänger dieser in den meisten Fällen im Mittenbereich des Fahrzeuges erfasst wird, so dass insbesondere dieser Bereich so weich zu gestalten ist, dass auf ein Bein eines vom Kraftfahrzeug erfassten Fußgängers nur eine begrenzte Kraft wirkt. Werden gleichzeitig die Bereiche vor den Crashboxen härter ausgebildet, so können diese auch in einem Danner-Test einen erheblichen Beitrag zur Energieaufnahme beitragen, so dass die eigentlichen Crashboxen hinter dem Querträger kürzer gebaut werden können und damit der Stoßfänger gegenüber einer herkömmlichen Bauweise zurückversetzt ist. Obwohl der Stoßfänger bei dieser Bauweise eine hohe Fußgängerkompatibilität aufweist, ist keine übermäßige Verlängerung des Fahrzeuges zu verzeichnen, da sich die härteren Bereiche in Fahrzeuglängsrichtung betrachtet auf gleicher Höhe mit den weicheren fußgängerkompatiblen Bereichen befinden.

Eine Möglichkeit, die Nachgiebigkeit der Langkappe über die Fahrzeugbreite zu variieren, besteht darin, dass ihre Seitenwände im Mittenbereich geschwächt sind. Dies kann z. B. durch Verdünnung der Wandstärke, durch Ausbildung von Sicken oder Vertiefungen oder durch Langlöcher geschehen.

Grundsätzlich kann auch der sich im Hohlkörper befindende Schaum in seiner Steifigkeit variiert werden. Dies kann z. B. durch eine Variation seines inneren Aufbaus und/oder seiner Form erfolgen.

Wie schon weiter oben erwähnt, ist die Wahrscheinlichkeit, dass der Fußgänger von der Mitte des Fahrzeuges erfasst wird, relativ hoch. Es kann daher von Vorteil sein, die Stoßfänger bogenförmig zu formen, wobei der Querträger im Wesentlichen gerade verläuft, so dass sich im Mittenbereich eine wesentlich dickere Schaumstofflage ergibt. Die gebogene Form hat nicht nur diesen Vorteil, sie wirkt außerdem ästhetisch und führt dazu, dass in den Randbereichen Schrägen entstehen, die als Abweisflächen dienen, wenn ein Fußgänger doch von den Randbereichen erfasst werden sollte.

Eine Ausführung besteht darin, dass der Vorbau vor den Crashboxen aus jeweils einer Vorcrashbox besteht und der Mittenbereich zwischen den beiden Vorcrashboxen durch eine Schaumstofflage gebildet ist. Bei dieser Ausführung werden somit die verschiedenen Bereiche baulich getrennt.

Die Vorcrashbox kann z. B. ein zu einem Bügel geformter Blechstreifen sein, der noch besser Energie durch Verformung aufnehmen kann als eine steife Schaumlage unterhalb einer steifen Kappe. Bei dieser Ausführung sind somit die verschiedenen Funktionen noch deutlicher getrennt. Während die Vorcrashbox Energie bei einer Kollision entsprechend dem Danner-Test aufnimmt, dient die zwischen den Vorcrashboxen liegende Schaumstofflage dazu, die Kraft auf ein Fußgängerbein möglichst gering zu halten.

Eine bevorzugte Ausführung des Bügels besteht darin, dass er in der Sicht von oben eine dachartige Form hat, wobei die nach innen gewandte Seite steiler ist als die nach außen gewandte Seite. Auf diese Weise ergibt sich wiederum eine Schräge, die als Abweisfläche für ein Fußgängerbein dient. Eine solche Vorcrashbox ist leicht herzustellen, da lediglich ein Blechstreifen in entsprechender Weise gefaltet werden muss. Außerdem ergibt sich durch die Form eine Variation in der Darstellung der Widerstandskraft: Bei einer Kollision mit einem festen Hindernis kann davon ausgegangen werden, dass dieses zunächst den First des Daches trifft, so dass die Kräfte über die beiden Dachseiten in die Crashbox geleitet werden. Bei einer Kollision mit einem Fußgänger in diesem Bereich dürfte mit hoher Wahrscheinlichkeit die flache Seite getroffen werden, die sich durchbiegt, wodurch Kräfte auftreten, die durchaus noch beinkompatibel sind.

Im Folgenden soll anhand zweier Ausführungsbeispiele die Erfindung näher erläutert werden. Dazu zeigen
- Fig. 1: eine Draufsicht auf einen Stoßfänger in schematischer Form gemäß den Stand der Technik,
- Fig. 2: einen Schnitt entlang der Linie II - II der Figur 1,
- Fig. 3: einen Schnitt entlang der Linie III - III der Figur 1,
- Fig. 4: eine Draufsicht auf die linke Seite eines Stoßfängers gemäß einer Ausführung der Erfindung,
- Fig. 5: eine Detaildarstellung der in der Ausführung verwendeten Vorcrashbox.

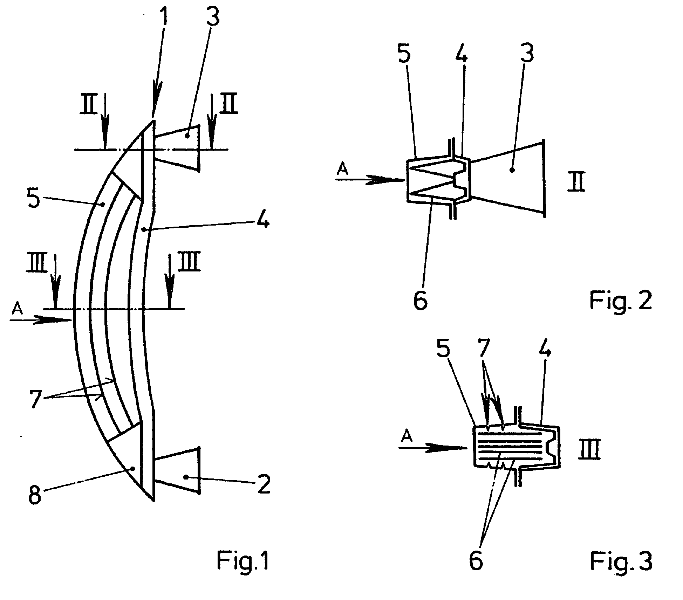

Zunächst wird auf die Figur 1 Bezug genommen. Diese zeigt in schematischer Weise einen Stoßfänger 1, der vor den Crashboxen 2, 3 einer Fahrzeugkarosserie befestigt ist. Dazu besteht der Stoßfänger 1 aus einem Querträger 4, der sich in Form einer Brücke von der einen Crashbox 2 zur anderen Crashbox 3 erstreckt. Diese hat, wie das die Querschnitte der Figuren 2 und 3 zeigen, ein nach vorn offenes, U-förmiges Profil.

Über die gesamte Breite des Querträgers 4 erstreckt sich eine Langkappe 5, die ein nach hinten offenes, U-förmiges Profil aufweist, so dass sie zusammen mit dem Querträger 4 einen Hohlkörper bildet. In dem Hohlkörper ist eine Schaumstofflage 6 eingesetzt. Die Langkappe 5 hat, wie Figur 1 zeigt, eine gebogene Form, so dass der Stoßfänger 1 in der Mitte des Fahrzeuges entsprechend der Schnittlinie III - III in Fahrzeuglängsrichtung betrachtet am tiefsten ist. Die Steifigkeit der Langkappe 5 bezogen auf eine Krafteinleitung in Richtung Pfeil A variiert mit der Breite des Fahrzeuges. In der Mitte soll sie am kleinsten sein und zu den Randbereichen vor den Crashboxen 2, 3 größer werden. Dazu besitzt die Langkappe 5, wie dies die Figur 3 zeigt, in ihrem Mittenbereich in den Seitenwänden Sicken 7, die es erlauben, dass die Langkappe 5 mit einem geringen Kraftaufwand gestaucht werden kann.

Auch die Steifigkeit der Schaumstofflage 6 variiert. Dies wird im Wesentlichen dadurch erreicht, dass sich ihre Struktur ändert. Im Mittenabschnitt, siehe Fig.3, besteht sie z. B. aus mehreren, sich in horizontaler Lage erstreckenden und parallel zueinander verlaufenden Schichten. Gemäß der Figur 2 bilden diese Lagen vor den Crashboxen 2, 3 spitzwinklige Dreiecke, die insgesamt eine steifere Struktur aufweisen. Dadurch ist der Vorbau in den Randbereichen vor den Crashboxen 2, 3 insgesamt steifer, so dass dieser in diesen Bereichen bei einem Danner-Test eine signifikante Energiemenge aufzunehmen vermag. Sollte wider Erwarten in diesem Bereich eine Fußgängerkollision stattfinden, so ergibt sich durch den Bogenverlauf des Stoßfängers 1 eine schräg verlaufende Abweisfläche 8, was mit einer geringeren Krafteinwirkung auf das Bein des Fußgängers verbunden ist, da dieses nach außen neben den Stoßfänger geleitet wird, wo kein Widerstand mehr vorhanden ist.

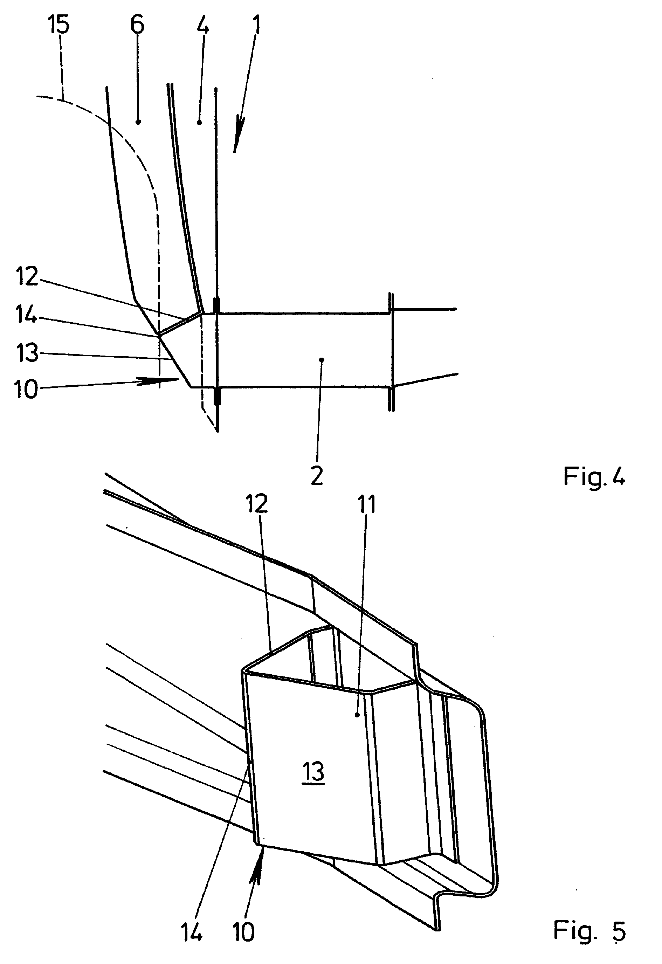

In den Figuren 4 und 5 ist eine Ausführung der Erfindung dargestellt. Auch hier ist der Mittenbereich durch eine Schaumstofflage 6 dargestellt, der ebenfalls - was aber nicht näher dargestellt ist - durch eine Langkappe abgedeckt sein kann. Der entscheidende Unterschied besteht darin, dass die Versteifung im Randbereich vor den Crashboxen 2, 3 durch jeweils eine explizit ausgebildete Vorcrashbox erfolgt, von denen nur die linke 10 dargestellt ist, da die Figur 4 nur den linken Bereich des Stoßfängers 1 darstellt.

Wie Figur 5 näher darstellt, besteht diese Vorcrashbox 10 aus einem Bügel 11, der in der Draufsicht von oben eine in etwa dachartige Struktur mit einer steilen Seite 12 und einer flachen Seite 13 aufweist. Die steilen Seiten 12 der beiden Crashboxen 2, 3 begrenzen den mittleren Bereich, in dem sich die Schaumstofflage 6 befindet (in der Figur 5 nicht dargestellt). Die flachere Seite 13 bildet die schon erwähnte Abweisfläche. Durch die nach oben und unten offene Form der Vorcrashbox 10 kann die flache Seite 13 leicht eingebeult werden, so dass die Kräfte auf das Bein des Fußgängers im erträglichen Bereich bleiben. Der vorspringende First 14 der dachförmigen Struktur bildet eine Kontaktlinie für ein festes Hindernis 15 (strichpunktiert angedeutet), wobei hier wirkende Stoßkräfte über die beiden Seiten in die dahinter liegende Crashbox 2 eingeleitet werden, während - wie dies die Figur 4 zeigt - die Seiten 12, 13 in einer Verlängerung der Seitenwände der Crashbox 2 liegen.

Der Querträger 4, der im übrigen relativ steif ausgeführt ist, bewirkt zudem, dass bei einem Aufprall der einen Fahrzeugseite auf ein Hindernis ein Teil der Kräfte auf die andere Seite übertragen wird, so dass auch die Crashbox, die im nicht unmittelbaren Kollisionsbereich liegt, zum Teil deformiert wird und Energie aufnimmt. Dies vermeidet, dass die im Kollisionsbereich liegende Crashbox vollständig zusammengedrückt wird und es doch noch zu Beschädigungen des dahinter liegenden Längsträgers kommt.

### Bezugszeichenliste

- 1: Stoßfänger
- 2: Crashbox
- 3: Crashbox
- 4: Querträger
- 5: Langkappe

- 6: Schaumstofflage
- 7: Sicken
- 8: Abweisfläche
- 9 10: Vorcrashbox
- 11: Bügel
- 12: steile Seite
- 13: flache Seite
- 14: First
- 15: Hindernis

## Patentansprüche

1. Frontstruktur eines Kraftfahrzeuges mit zwei Längsträgern, an deren Enden Crashboxen (2, 3) angebracht sind, und einem an den Crashboxen (2, 3) befestigten Stoßfänger (1), wobei der Stoßfänger (1) einen vor den Crashboxen (2, 3) befestigten Querträger (4) aufweist, an dessen Vorderseite sich ein Vorbau befindet, wobei dieser in seinem Mittenbereich so weich ist, dass auf ein Bein eines vom Kraftfahrzeug erfassten Fußgängers nur eine begrenzte Kraft wirkt, und dass dieser in den Randbereichen vor den Crashboxen (2, 3) härter als im Mittenbereich ausgeführt ist, so dass jeder Randbereich bei einem Danner-Test eine signifikante Energiemenge aufzunehmen vermag, **dadurch gekennzeichnet, dass** dazu der Vorbau vor den Crashboxen (2, 3) aus jeweils einer Vorcrashbox (10) besteht und der Mittenbereich zwischen den beiden Vorcrashboxen (10) durch eine Schaumstofflage (6) gebildet ist.

2. Frontstruktur nach Anspruch 1, **dadurch gekennzeichnet, dass** der Vorbau aus einer Schaumstofflage (6) in einer im Schnitt U-förmigen Langkappe (5) besteht, die sich über die Breite des Querträgers (4) erstreckt und mit diesem einen Hohlkörper bildet, und dass die Langkappe (5) im Mittenbereich nachgiebiger gestaltet ist als in den Randbereichen vor den Crashboxen (2, 3).

3. Frontstruktur nach Anspruch 2, **dadurch gekennzeichnet, dass** die Seitenwände der Langkappe (5) im Mittenbereich der Stoßfänger (1) geschwächt sind.

4. Frontstruktur nach Anspruch 2, **dadurch gekennzeichnet, dass** der Aufbau der Schaumstofflage (6) in dem Randbereich steifer ist als im Mittenbereich.

5. Frontstruktur nach einem der vorhergehenden Ansprüche, **dadurch gekennzeichnet, dass** der Querträger (4) im Wesentlichen gerade ist und die Langkappe (5) in einem Bogen vor dem Querträger (4) verläuft, wobei deren Abstand zum Querträger (4) in der Kraftfahrzeugmitte am größten ist.

6. Frontstruktur nach Anspruch 1, **dadurch gekennzeichnet, dass** die Vorcrashboxen (10) aus jeweils einem Bügel (11) bestehen.

7. Frontstruktur nach Anspruch 6, **dadurch gekennzeichnet, dass** der Bügel (11) in der Sicht von oben eine dachartige Form hat, wobei die nach innen gewandte Seite (12) steiler ist als die nach außen gewandte Seite (13).

## Claims

1. A front-body structure of a motor vehicle, comprising two longitudinal beams, to the ends of which crash boxes (2, 3) are attached, and a bumper (1) fastened to the crash boxes (2, 3), with the bumper (1) having a cross member (4) fastened in front of the crash boxes (2, 3), at the front side of which a front end is disposed, with the same being so soft in its middle section that an only limited force acts upon a leg of a pedestrian who is hit by the motor vehicle, and that said front end is arranged harder in said boundary sections in front of the crash boxes (2, 3) than in the middle section, so that each boundary section is capable of absorbing a significant quantity of energy during a Danner test, **characterized in that** the front end in front of the crash boxes (2, 3) consists of a front crash box (10) each and the middle section between the two front crash boxes (10) is formed by a layer (6) of foamed material.

2. A front-body structure according to claim 1, **characterized in that** the front end consists of layer (6) of foamed material in a long cap (5) which is U-shaped in its cross section and which extends over the width of the cross member (4) and forms a hollow body with the same, and the long cap (5) is arranged to be more resilient in the middle section than the boundary sections in front of the crash boxes (2, 3).

3. A front-body structure according to claim 2, **characterized in that** the side walls of the long cap (5) are weakened in the middle section of the bumpers (1).

4. A front-body structure according to claim 2, **characterized in that** the structure of the layer (6) of foamed material is stiffer in the boundary section than in the middle section.

5. A front-body structure according to one of the preceding claims, **characterized in that** the cross member (4) is substantially straight and the long cap (5) extends in a bend in front of the cross member (4), with its distance to the cross member (4) being largest in the middle of the vehicle.

6. A front-body structure according to claim 1, **characterized in that** the front crash boxes (10) each consist of a bracket (11).

7. A front-body structure according to claim 6, **characterized in that** the bracket (11) has a roof-like shape when viewed from above, with the inwardly facing side (12) being steeper than the outwardly facing side (13).

## Revendications

1. Structure d'avant d'un véhicule à moteur avec deux longerons dont les extrémités portent des caissons anticollision (2, 3) et avec un pare-chocs (1) fixé aux caissons anticollision (2, 3), dans lequel le pare-chocs (1) présente une traverse (4) fixée devant les caissons anticollision (2, 3), dont la partie avant porte une structure d'avant-corps, celle-ci étant suffisamment ductile dans sa partie médiane pour qu'une force limitée agisse sur la jambe d'un piéton heurté par le véhicule à moteur, et étant plus dure dans les régions de bord situées devant les caissons anticollision (2, 3) que dans la partie médiane, de sorte que cette région de bord puisse absorber une quantité d'énergie significative lors d'un test de Danner, **caractérisée en ce que** l'avant-corps situé devant les caissons anticollision (2, 3) se compose d'un caisson anticollision avancé (10) de chaque côté et la partie médiane entre les deux caissons anticollision avancés (10) est formée par une couche de mousse (6).

2. Structure d'avant selon la revendication 1, **caractérisée en ce que** l'avant-corps se compose d'une couche de mousse (6) dans un capuchon allongé (5) en forme de U en coupe, qui s'étend sur la largeur de la traverse (4) et forme avec celle-ci un corps creux, et **en ce que** le capuchon allongé (5) est plus souple dans la région centrale que dans les régions de bord situées devant les caissons anticollision (2, 3).

3. Structure d'avant selon la revendication 2, **caractérisée en ce que** les parois latérales du capuchon allongé (5) sont affaiblies dans la région médiane des pare-chocs (1).

4. Structure d'avant selon la revendication 2, **caractérisée en ce que** la structure de la couche de mousse (6) est plus rigide dans la région des bords que dans la région médiane.

5. Structure d'avant selon l'une des revendications précédentes, **caractérisée en ce que** la traverse (4) est sensiblement rectiligne et le capuchon allongé (5) forme un arc de cercle devant la traverse (4) en s'éloignant au maximum de la traverse (4) au milieu du véhicule.

6. Structure d'avant selon la revendication 1, **caractérisée en ce que** les caissons anticollision avancés (10) se composent chacun d'un arceau (11).

7. Structure d'avant selon la revendication 6, **caractérisée en ce que** l'arceau (11) a la forme d'un toit en vue de dessus, le côté orienté vers l'intérieur (12) étant plus pentu que le côté orienté vers l'extérieur (13).
